# EUROPEAN PATENT APPLICATION

(11) **EP 4 238 796 A1**
(43) Date of publication of application: **06.09.2023**
(21) Application number: 23157835.2
(22) Date of filing: 21.02.2023
(51) Int. Cl.: B60H 1/32, B60L 58/30

(54) **INTEGRATED FUEL CELL ARCHITECTURE FOR TRANSPORTATION REFRIGERATION**

(30) Priority: 01.03.2022 US 202263315351 P
(71) Applicant: Carrier Corporation, Palm Beach Gardens, FL 33418 (US)
(72) Inventor: MAKWINSKI, Mark, Palm Beach Gardens, 33418 (US); PETERSON, Eric C., Palm Beach Gardens, 33418 (US); OGGIANU, Stella Maris, Palm Beach Gardens, 33418 (US); HASSEL, Bart Antoine van, Palm Beach Gardens, 33418 (US)
(74) Representative: Dehns

(57) **Abstract**

A power system (36) of a transport refrigeration system including a truck and one or more cargo compartments (18) includes a refrigeration and propulsion fuel cell (38) and a fuel system (40) to supply a flow of fuel to the refrigeration and propulsion fuel cell. A power electronics module (42) is operably connected to the refrigeration and propulsion fuel cell (38) and a propulsion unit (14) is driven by energy generated at the refrigeration and propulsion fuel cell (38). The propulsion unit (14) is configured to drive the truck. A transport refrigeration unit (22) is powered in a first mode by energy generated at the refrigeration and propulsion fuel cell (38). The transport refrigeration unit (22) is configured to provide cooling to the one or more cargo compartments (18). When the transport refrigeration unit (22) is disconnected from the refrigeration and propulsion fuel cell (38), the transport refrigeration unit is powered in a second mode by one or more secondary power sources.

## Description

Exemplary embodiments pertain to the art of transport refrigeration systems, and in particular transport refrigeration systems powered by fuel cells.

Typically, a transport refrigeration system includes a tractor powered by a diesel engine and a transport refrigeration unit (TRU) at the trailer, which utilizes a dieselpowered refrigeration generator to drive the transport refrigeration unit (to provide cooling to a cargo compartment of the trailer). Since it is desirable to reduce emissions by eliminating the use of such an engine, refrigeration units powered by electric sources are being developed. Although a fuel cell may provide a viable option as a power source, difficulties arise with optimizing the fuel cell with the different components of the TRU, for example, for weight, efficiency, cost, etc.

In a first aspect of the invention, a power system of a transport refrigeration system including a truck and one or more cargo compartments includes a refrigeration and propulsion fuel cell and a fuel system to supply a flow of fuel to the refrigeration and propulsion fuel cell. A power electronics module is operably connected to the refrigeration and propulsion fuel cell and a propulsion unit is driven by energy generated at the refrigeration and propulsion fuel cell. The propulsion unit is configured to drive the truck. A transport refrigeration unit is powered in a first mode by energy generated at the refrigeration and propulsion fuel cell. The transport refrigeration unit is configured to provide cooling to the one or more cargo compartments. When the transport refrigeration unit is disconnected from the refrigeration and propulsion fuel cell, the transport refrigeration unit is powered in a second mode by one or more secondary power sources.

Optionally, a power storage unit is configured to store excess energy generated by the refrigeration and propulsion fuel cell and provide stored energy to operate the power system.

Optionally, the one or more secondary power sources includes one or more of the power storage unit, a secondary fuel cell, or an external power grid.

Optionally, the flow of fuel is a flow of hydrogen.

Optionally, the one or more cargo compartments are located at a trailer disconnectably attached to the truck.

Optionally, two or more components of the transport refrigeration unit are positioned throughout an envelope of the trailer.

Optionally, one or more components of the two or more components are located under the trailer.

Optionally, the refrigeration and propulsion fuel cell is formed into one or more structural components of the cargo compartment.

Optionally, the transport refrigeration unit includes one or more electrocaloric or thermoelectric modules embedded in the one or more cargo compartments to provide cooling to the one or more cargo compartments.

A second aspect of the invention provides a transport refrigeration system including a truck and a trailer disconnectably attached to the truck, the trailer including one or more cargo compartments includes a refrigeration fuel cell, a propulsion fuel cell, a fuel system to supply a flow of fuel to the refrigeration fuel cell and the propulsion fuel cell, a refrigeration power electronics module operably connected to the refrigeration fuel cell, and a propulsion power electronics module operably connected to the propulsion fuel cell. A propulsion unit is operably connected to the propulsion power electronics module and driven by energy generated at the propulsion fuel cell. The propulsion unit is configured to drive the truck. A transport refrigeration unit is connected to the refrigeration power electronics module and powered by energy generated at the refrigeration fuel cell. The transport refrigeration unit is configured to provide cooling to the one or more cargo compartments. When the transport refrigeration unit is disconnected from the fuel system, the transport refrigeration unit is powered by one or more secondary power sources.

Optionally, a power storage unit is configured to store excess energy generated by the refrigeration fuel cell and the propulsion fuel cell, and provide stored energy to operate the power system.

Optionally, the one or more secondary power sources includes one or more of the power storage unit, a secondary fuel cell, or an external power grid.

Optionally, two or more components of the transport refrigeration unit are located throughout an envelope of the trailer.

Optionally, one or more components of the two or more components are located under the trailer.

Optionally, the refrigeration fuel cell is formed into one or more structural components of the one or more cargo compartments.

Optionally, the transport refrigeration unit includes one or more electrocaloric or thermoelectric modules are embedded in the one or more cargo compartments to provide cooling to the one or more cargo compartments.

Optionally, the fuel tank includes a propulsion fuel system operably connected to the propulsion fuel cell, and a refrigeration fuel system operably connected to one of the propulsion fuel system or a secondary fuel system when separated from the propulsion fuel system.

Optionally, fuel is transferrable between the propulsion fuel system and the refrigeration fuel system.

The following descriptions should not be considered limiting in any way. With reference to the accompanying drawings, like elements are numbered alike:
FIG. 1 is a schematic illustration of an exemplary transport refrigeration system;
FIG. 2 is a schematic illustration of an exemplary transport refrigeration unit (TRU);
FIG. 3 is a schematic illustration of an exemplary integrated power system of a transport refrigeration system;
FIG. 4 is another schematic of an exemplary integrated power system of a transport refrigeration system;
FIG. 5 is an illustration of an exemplary power system of a transport refrigeration system having separate fuel cells to power the TRU and a propulsion system; and
FIG. 6 is another illustration of an exemplary power system of a transport refrigeration system having separate fuel cells to power the TRU and a propulsion system.

A detailed description of one or more embodiments of the disclosed apparatus and method are presented herein by way of exemplification and not limitation with reference to the Figures.

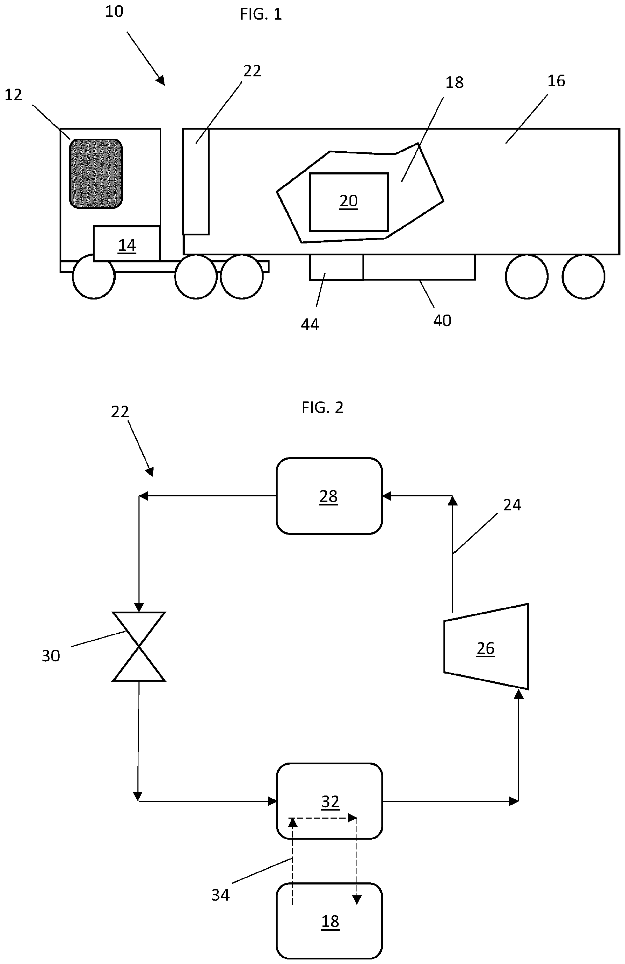

Referring to FIG. 1, illustrated is a schematic of a transport refrigeration system 10. Although described herein that the transport refrigeration system may be embodied as a tractor-trailer refrigerated system, it should be appreciated that the transport refrigeration system described herein may be applied to a non-trailer refrigeration such as, for example, a rigid truck, a truck having a refrigerated compartment, a shipping container having a refrigerated compartment, or a unit load device having a refrigerated compartment. As shown in FIG 1, the system 10, when embodied as a tractor-trailer refrigerated system, includes a tractor 12, which includes a propulsion unit 14 that provides propulsion for the system 10. A trailer 16 is attached to the tractor 12, and is moved, for example, pulled or pushed, by the tractor 12 along a roadway or other pathway. The trailer 16 is configured with an enclosed cargo compartment 18 in which a cargo 20 is transported. The trailer 16 further includes a transport refrigeration unit (TRU) 22 which provides conditioned airflow to the cargo compartment 18 to maintain a selected cargo temperature of the cargo 20. While one cargo compartment 18 is illustrated in FIG. 1, one skilled in the art will readily appreciate that the system 10 may include two or more cargo compartments 18.

Referring to FIG. 2, in some embodiments the TRU 22 utilizes a vapor compression cycle in which a flow of refrigerant 24 is directed through a compressor 26, a condenser 28, an expansion device 30 and an evaporator 32, where the flow of refrigerant 24 exchanges thermal energy with a flow of air 34, cooling the flow of air 34, which is then directed into the cargo compartment 18.

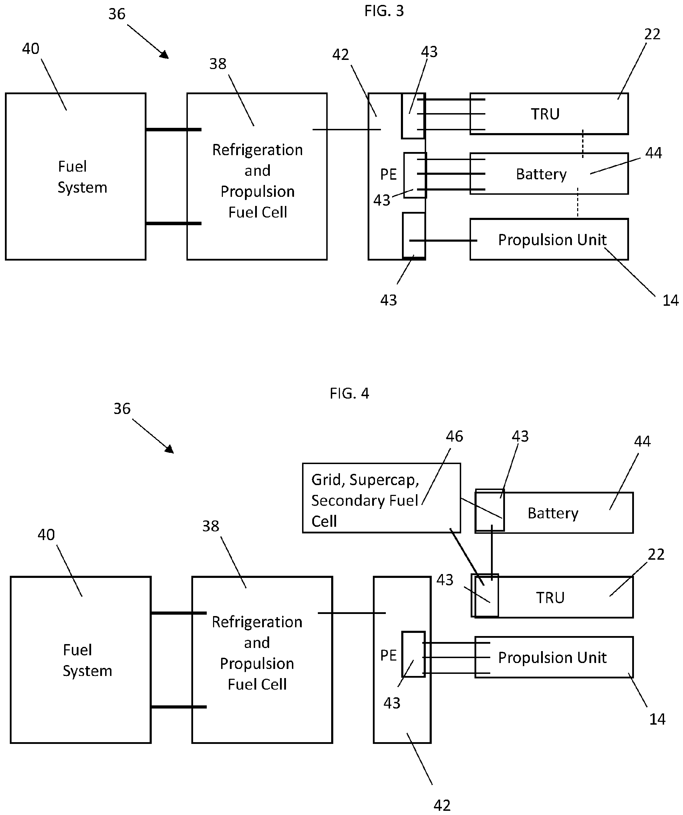

Referring now to FIG. 3, schematically illustrated is an embodiment of a fullyintegrated power system 36 of a transport refrigeration system 10. The power system 36 includes a refrigeration and propulsion fuel cell 38, which may use, for example, hydrogen as a fuel source. The refrigeration and propulsion fuel cell 38 is fueled from a single fuel system 40, which may include one or more fuel tanks, valves and associated connections and other components, such as safety devices. Energy generated at the refrigeration and propulsion fuel cell 38 is directed to a power electronics module 42. The power electronics module 42 in some embodiments includes power electronics units 43 for each of the battery 44, the propulsion unit 14 and the TRU 22. The power electronics module 42 is connected to the TRU 22, the propulsion unit 14, and in some embodiments, one or more power storage units 44, such as one or more batteries. The power electronics module 42 directs electrical energy to the TRU 22 and the propulsion unit 14 as needed for their operation, and excess energy generated by the refrigeration and propulsion fuel cell 38 is directed to the power storage units 44.

Referring now to FIG. 4, in cases where the TRU 22 is decoupled from the refrigeration and propulsion fuel cell 38, for example, when the refrigeration and propulsion fuel cell 38 is located with the tractor 12 and the trailer 16 is disconnected from the tractor 12, the TRU 22 utilizes power from, for example, the power storage units 44 or an external power source, such as a grid 46 a supercap, a secondary fuel cell 60 fueled by a secondary fuel tank 54, or any other energy / power system disposed at the trailer 16 as also illustrated in FIG. 1. Additionally, in some embodiments, the power storage unit 44 extracts electrical energy from the grid 46 or other external power source to charge the power storage unit 44.

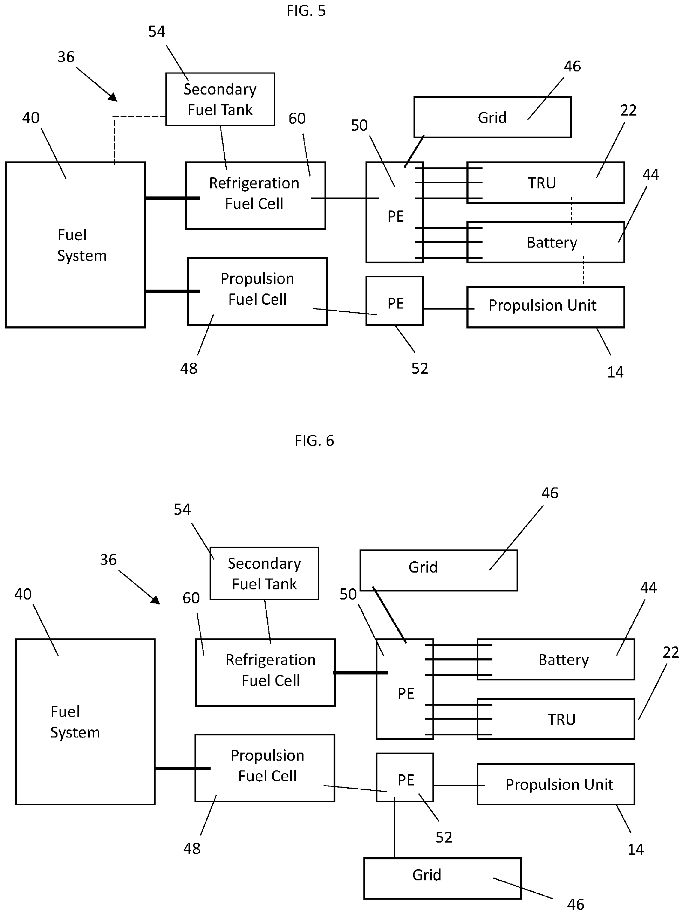

In another embodiment, as illustrated in FIG. 5, the TRU 22 is powered by a refrigeration fuel cell 60 and the propulsion unit 14 is powered by a separate propulsion fuel cell 48. In some embodiments, the refrigeration fuel cell 60 and the propulsion fuel cell 48 can be connected to a common fuel system 40. Energy generated at the refrigeration fuel cell 60 is directed to a refrigerator power electronics module 50, which directs electrical energy to the TRU 22 as required for operation of the TRU 22. Similarly, the energy generated at the propulsion fuel cell 48 is directed to a propulsion power electronics module 52, which directs electrical energy to the propulsion unit 14 as required for operation of the propulsion unit 14. As shown in FIG. 6, when the refrigeration fuel cell 60 is disconnected from the fuel tank 40, the refrigeration fuel cell 60 may be operated via a secondary fuel tank 54. Alternatively, electrical energy from, for example a power storage unit 44 or the grid 46 may be supplied to the refrigerator power electronics module 50 to allow for continued operation of the TRU 22. Further, in some embodiments fuel may be transferred between the main fuel system 40 and the secondary fuel tank 54 to allow for continued operation of the TRU 22, and/or continued operation of the propulsion unit 14.

Additionally, it is desired to improve space utilization, performance, and cost of the transport refrigeration system 10. As such, components may be designed and implemented as part of an integrated whole. In some embodiments, this may include dual purpose structural components, such as walls or floor of the cargo compartment 18 which may be utilized to store fuel, serving as fuel system 40, or additionally housing other components such as the fuel cells 38 and/or 48 in structural components of the tractor 12, the TRU 22 and/or cargo compartment 18. In some embodiments, the TRU 22 may be at least partially located at the tractor 12, with cooling lines or ducts connected to the cargo compartment 18. In other embodiments, the components of the TRU 22, such as the compressor 26, the condenser 28, the expansion device 30 and the evaporator 32 may be located across the envelope of the trailer 16, rather than at a single location on a front wall of the trailer 16 as is typical. For example, some components of the TRU 22 may be located beneath the trailer 16. Additionally, the walls of the trailer 16 may be utilized as active cooling components by, for example, embedding electrocaloric or thermoelectric modules in the walls of the trailer 16, which are connected to the power electronics module 42.

The transport refrigeration systems 10 described herein reduce system size and cost and simplify the architecture of fuel cell driven transport refrigeration systems 10, and highly integrates the truck 12, the trailer 16 and the refrigeration and propulsion fuel cell 38. Further, the presently disclosed configurations improve ease of manufacturing, reduce system weight, improve efficiency, reduce drag-induced turbulence, and lower the center of gravity of the transport refrigeration systems 10.

The term "about" is intended to include the degree of error associated with measurement of the particular quantity based upon the equipment available at the time of filing the application.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention, which is defined by the claims. In addition, many modifications may be made to adapt a particular situation or material to the teachings of the present invention without departing from the scope thereof. Therefore, it is intended that the present invention not be limited to the particular embodiment disclosed as the best mode contemplated for carrying out this present invention, but that the present invention will include all embodiments falling within the scope of the claims.

## Claims

1. A power system (36) of a transport refrigeration system including a truck and one or more cargo compartments (18), the power system comprising:
a refrigeration and propulsion fuel cell (38);
a fuel system (40) to supply a flow of fuel to the refrigeration and propulsion fuel cell (38);
a power electronics module (42) operably connected to the refrigeration and propulsion fuel cell (38);
a propulsion unit (14) driven by energy generated at the refrigeration and propulsion fuel cell (38), the propulsion unit configured to drive the truck; and
a transport refrigeration unit (22) powered in a first mode by energy generated at the refrigeration and propulsion fuel cell (38), the transport refrigeration unit configured to provide cooling to the one or more cargo compartments (18);
wherein when the transport refrigeration unit (22) is disconnected from the refrigeration and propulsion fuel cell (38), the transport refrigeration unit (22) is powered is a second mode by one or more secondary power sources.

2. The power system of claim 1, further comprising a power storage unit (44) configured to store excess energy generated by the refrigeration and propulsion fuel cell (38) and provide stored energy to operate the power system (36).

3. The power system of claim 1 or 2, wherein the one or more secondary power sources includes one or more of the power storage unit (44), a secondary fuel cell (60), or an external power grid (46).

4. The power system of any preceding claim, wherein the flow of fuel is a flow of hydrogen.

5. The power system of any preceding claim, wherein the one or more cargo compartments (18) are located at a trailer (16) disconnectably attached to the truck (12),
and optionally wherein two or more components of the transport refrigeration unit (22) are disposed throughout an envelope of the trailer (16),
and further optionally wherein one or more components of the two or more components are disposed under the trailer (16).

6. The power system of any preceding claim, wherein the refrigeration and propulsion fuel cell (38) is formed into one or more structural components of the cargo compartment (18).

7. The power system of any preceding claim, wherein the transport refrigeration unit includes one or more electrocaloric or thermoelectric modules embedded in the one or more cargo compartments (18) to provide cooling to the one or more cargo compartments (18).

8. A power system (36) of a transport refrigeration system including a truck (12) and a trailer (16) disconnectably attached to the truck, the trailer (16) including one or more cargo compartments (18), the power system comprising:
a refrigeration fuel cell (60);
a propulsion fuel cell (48);
a fuel system (40) to supply a flow of fuel to the refrigeration fuel cell (60) and the propulsion fuel cell (48);
a refrigeration power electronics module (50) operably connected to the refrigeration fuel cell (60);
a propulsion power electronics module (52) operably connected to the propulsion fuel cell (48);
a propulsion unit (14) operably connected to the propulsion power electronics module (52) and driven by energy generated at the propulsion fuel cell (48), the propulsion unit (14) configured to drive the truck; and
a transport refrigeration unit (22) connected to the refrigeration power electronics module (50) and powered by energy generated at the refrigeration fuel cell (60), the transport refrigeration unit (22) configured to provide cooling to the one or more cargo compartments (18);
wherein when the transport refrigeration unit (22) is disconnected from the fuel system (40), the transport refrigeration unit (22) is powered by one or more secondary power sources.

9. The power system of claim 8, further comprising a power storage unit (44) configured to store excess energy generated by the refrigeration fuel cell (60) and the propulsion fuel cell (48), and provide stored energy to operate the power system (36).

10. The power system of claim 8 or 9, wherein the one or more secondary power sources includes one or more of the power storage unit (44), a secondary fuel cell (54), or an external power grid (46).

11. The power system of any of claims 8 to 10, wherein two or more components of the transport refrigeration unit (22) are disposed throughout an envelope of the trailer (16),
and optionally wherein one or more components of the two or more components are disposed under the trailer (16).

12. The power system of any of claims 8 to 11, wherein the refrigeration fuel cell (60) is formed into one or more structural components of the one or more cargo compartments (18).

13. The power system of any of claims 8 to 12, wherein the transport refrigeration unit (22) includes one or more electrocaloric or thermoelectric modules are embedded in the one or more cargo compartments (18) to provide cooling to the one or more cargo compartments (18).

14. The power system of any of claims 8 to 13, wherein the fuel tank includes:
a propulsion fuel system operably connected to the propulsion fuel cell (48); and
a refrigeration fuel system operably connected to one of the propulsion fuel system or a secondary fuel system when separated from the propulsion fuel system.

15. The power system of claim 14, wherein fuel is transferrable between the propulsion fuel system and the refrigeration fuel system.
